Europäisches Patentamt

European Patent Office

Office européen des brevets

(19)

(11) Publication number: **0 089 160**
**B1**

# EUROPEAN PATENT SPECIFICATION

(12)

(45) Date of publication of patent specification: **10.09.86**

(51) Int. Cl.⁴: **A 23 B 4/00, A 23 L 1/232**

(21) Application number: **83301186.9**

(22) Date of filing: **04.03.83**

(54) **Liquid smoke.**

(30) Priority: **15.03.82 US 357976**

(43) Date of publication of application:
**21.09.83 Bulletin 83/38**

(45) Publication of the grant of the patent:
**10.09.86 Bulletin 86/37**

(84) Designated Contracting States:
**DE GB SE**

(56) References cited:
**GB-A-2 011 241**
**US-A-3 873 741**

(73) Proprietor: **GRIFFITH LABORATORIES U.S.A., INC.**
**12200 South Central Avenue**
**Alsip Illinois 60657 (US)**

(72) Inventor: **Melcer, Irving**
**10 Wilson Court**
**Park Forest Illinois 60466 (US)**

(74) Representative: **Harrison, David Christopher et al**
**MEWBURN ELLIS & CO 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 089 160 B1

## Description

The present invention relates to a method of making improved liquid smoke products. More particularly, the invention is directed to a process for effectively removing precipitable tar-like materials from liquid smoke to provide final products having improved properties including increased staining capability, enhanced storage stability, and a reduced concentration of materials separable from the liquid smoke upon dilution thereof.

Liquid smoke products of the general type involved in the present invention are widely used to impart smoke flavor and smoked appearance to various food products, and to meat products in particular.

The production of smoked comestibles (for example, smoked meat) has traditionally been done by exposing the article of food to vapor smoke, produced by the burning of wood. In recent years, liquid smoke products have enjoyed considerable acceptance as a replacement for vapor smoke in the production of smoked foods. This is because liquid smoke offers many advantages over the use of vapor smoke, such as: easier application, uniformity, cleanliness, environmental and safety considerations, etc. Typically liquid smoke has been applied to foods by a dipping or drenching operation, by vaporization or atomization of the liquid smoke into minute particles in smokehouses to simulate vapor smoke, or by addition to pumping pickles. In many of these applications, the liquid smoke is mixed or diluted with water, with or without added acidulants.

One drawback in the dilution of liquid smoke is that it contains materials which "precipitate out" on the addition of aqueous liquids. These materials are resinous or tarry in nature, and are referred to herein as precipitable solids or soluble tars. Precipitable "solids" in liquid smoke derive from the complex and highly reactive nature of the many hundreds of constituents which have been characterized in liquid smoke. Tars precipitation on dilution of the smoke with water or other aqueous liquids deters the widespread utilization of liquid smoke for the manufacture of smoked foods. Such precipitable solids may cause unsightly blotches on the smoked food, and also may clog the nozzles used in any spraying application, or the piping used in drenching applications.

Thus, it is very desirable to have liquid smoke products which would contain a minimum of such precipitable solids on dilution with water. One approach to achieving the latter goal has been the addition of "solubilizing agents or surface active agents to the liquid smoke. It has been found that a relatively small amount of such agent added to liquid smoke effectively prevents the separation of precipitable solids when the compounded smoke is mixed with aqueous liquids. However, the surfactant is very expensive, and adds significantly to the cost of liquid smoke. Further, surface active agents promote undesirable foaming of the diluted smoke, especially in drenching applications.

Liquid smoke products are manufactured commercially by aqueous counter-current extraction of vapour smoke in packed towers. Several commercial products are currently marketed under various trademarks. One such family of liquid smoke products, sold by applicants, is marketed under the trademark, ROYAL SMOKE. The method of producing this liquid smoke is by a process described in Melcer and Sair U.S. Patent No. 3,873,741, which is assigned to the applicants of the present application. The entire disclosure of that patent is hereby specifically incorporated herein by reference, to the extent it is not inconsistent herewith.

The present invention provides a process for the treatment of an aqueous smoke extract to provide a liquid smoke product which process appears to provide a liquid smoke product having improved staining capability, enhanced storage stability, and a reduced concentration of materials separable from the liquid smoke upon dilution.

In accordance with the method of U.S. Patent No. 3,873,741, smoke produced by heating wood in oxygen controlled atmosphere is extracted with water in a packed tower or scrubber. The resulting "crude" liquid smoke liquor, diluted if desired, is allowed to settle for up to two weeks so as to separate insoluble "tars". These tars are then removed. Optionally, special additives may be incorporated in the aqueous extract (the "liquid smoke").

The temperature of the crude liquor, as freshly produced, is relatively high above (80°F about 27°C and normally 160°F—180°F, about 70—80°C). Heretofore, it has been the accepted practice to allow the liquid smoke to "store" while cooling to ambient temperature, without interference. After a settling period, the formed precipitated tars would then be separated.

By contrast, in the process of the present invention the extract is comparatively rapidly cooled to precipitate out the solids, which are then removed. The cooling and the removal are, carried out within five days of the production of the aqueous extract. The cooling is 60°F (about 15°C) or below, whereas the normal production temperature is 80° to 180°F (about 27 to 80°C).

An important facet of the present invention is the discovery that it is detrimental to the quality of liquid smoke, particularly to that parameter identified as the Staining Index (correlated with the capacity of the liquid to impart a "smoked" appearance to the treated comestibles) to store or to hold the liquid smoke at sustained elevated temperatures or even at room temperature in contact with precipitated solids (tars) present in the liquid.

The novelty of the present invention is predicated in part on the unexpected discovery that markedly superior liquid smoke results if the product is promptly and rapidly cooled, after it is produced, and the supernatant clear fluid is then separated from the precipitated "solids". Preferably, the cooling is carried out within about 48 to 72 hours after production of the aqueous smoke extract. The "tars" are then separated. The benefits of the present invention are realized if the cooling is achieved within about 5 days after production of the aqueous extract. The accelerated cooling dispels the need to allow a one- to two-week "settling" period to effectuate phase separation of precipitated "tars". Moreover, if cooling is delayed substantially beyond a 5-day period, the quality of the product, particularly with respect to staining capacity, is markedly impaired.

"Precipitable solids" are solids precipitable on dilution which were assayed by diluting one volume of liquid smoke with two volumes of water and quantitatively determining the amount of any resulting separated phase.

The important effect of reducing the precipitatable solids content of liquid smoke was clearly demonstrated by holding the liquid smoke for two weeks in the cold, for example, at 35°F—45°F (about 2—7°C). It was found that the resulting liquid smoke (supernatant) contained only about 77% of the amount of precipitable solids found in liquid smoke stored under ambient conditions for a similar period. That is, about 23% of the normally present precipitable solids were removed by cooling promptly, resulting in a reduced need for solubilizing agents, to effect a marked saving in product cost.

In another series of tests involving exposure of liquid smoke to various temperatures of treatment and storage, it was found that storage at 90°F (32°C) increased the residual precipitable solids; whereas, storage at 45°F (7°C) markedly reduced such precipitable solids content, as compared with liquid smoke stored at 70°F (21°C). Also, regardless of storage temperature, a chilling treatment was found to have a beneficial effect of reducing the precipitable solids. Continuous chilled storage yielded the lowest level of residual precipitable solids, and liquid smoke products having enhanced staining capacity.

The studies carried out establish that chilling of liquid smoke results in markedly improved products. The following relevant facts are pertinent:

a) precipitable solids accumulate (form) in liquid smoke, as a function of time and temperature;

b) the accumulation of precipitable solids is more rapid at higher storage temperatures.

(It is presently postulated that the precipitable solids represent an intermediate stage in the deposition of insoluble tars in the liquid smoke storage containers. The precipitable solids are believed to increase to a value where their concentrational level exceeds their solubility in the liquid, whereupon the solids precipitate).

c) early chill treatment of the liquid smoke is beneficial in that it effects prompt separation of excess precipitable solids from the aqueous extract. These solids are then discardable to ensure that the final shipping containers containing the liquid smoke remain free of precipitated tars for a significantly longer time period;

d) pre-chilling not only minimizes unsightly deposition of tars in storage drums, but helps prevent the inadvertent undesirable and objectionable deposits of tars on meat and other food products during processing;

e) pre-chilling reduces the concentration of solubilizing agent required in "soluble smoke" products, thereby significantly reducing the cost of this type of liquid smoke;

f) early chilling of the liquid smoke provides a liquid smoke product which is less prone to become cloudy on water dilution. Also, from a temperature standpoint, the improved product also exhibits a lowered "cloud point;"

g) pre-chilling of liquid smoke promptly to effect removal of precipitable solids including "tars" provides a final product having a significantly increased, and stabilized "staining index" correlated with an enhanced capability of the liquid smoke to impart "smoke color" to treated comestibles. The effect is believed to be due to the cooling having a stabilizing or preserving effect on carbonyl compounds contained in the liquid smoke. Experimental evidence supports the belief that the carbonyls are the primary chemical agents responsible for the meat-coloring capability, or the very important staining power of liquid smoke.

h) a critical feature of the method of the invention is that the chilling of the liquid smoke must be carried out promptly after production of the aqueous extract. The word "promptly" as used herein means within about 5 days, but preferably within 48—72 hours. The temperature of the extract would be brought down to about 60°F (about 15°C), or lower.

Detailed description of the preferred methods

The aims, objects and advantages of the present invention are achieved by promptly and effectively significantly cooling commercially produced liquid smoke upon the recovery and isolation thereof from the extraction system. The cooling is to a temperature below about 60°F (about 15°C) and is carried out within about 5 days and preferably within 48 to 72 hours of production. The supernatant clear liquid is then separated from the precipitated tar-like phase which forms during the cooling period.

One early realization that elevated temperatures have adverse effects on the quality and also increase the cost of liquid smoke was the discovery that increased quantities of added surfactants were required to ensure solubilization of liquid smoke produced during summer months as compared with liquid smoke manufactured during the winter season. (It has been the practice of applicant's assignee to add special solubilizing agents to their commercial liquid smoke to prevent solids precipitation and to prevent throw out or phase separation in the liquid smoke upon aqueous dilution.)

In investigation researches carried out it was found that supernatants of liquid smoke stored out of doors for two weeks in the summer contained increased levels of total and soluble "tars" and required more surface active agents or solubilizing agent than did the supernatants of duplicate samples kept refrigerated for the same time period.

In a controlled investigative program, the following facts were established regarding liquid smoke:

a) chilling or subjecting the aqueous extract (liquid smoke) to lower temperatures produced cloudiness and phase separation.

b) continuous refrigerated storage produced the lowest concentration of total and precipitable solids in the treated liquid smoke and a lessened need for solubilizing agents.

c) A "final" chill treatment prior to final processing, regardless of storage temperature history, reduces the concentration of precipitable solids contained in the resulting liquid smoke.

d) an initial chilling, without then carrying out a phase separation (to remove precipitated tars), but followed by storage at "summer conditions" still produced high total and precipitable solids and an increased requirement for solubilizing agents.

e) high storage temperature for the aqueous extract reduced the commercially important staining power of the liquid smoke product.

In accordance with the practice of the present invention, it has been found 1) that high temperature storage is deleterious to liquid smoke quality, 2) that the noted adverse effects cannot be remedied by initial cooling alone, and 3) that one can avoid the increased solids content and the related need for increased concentrations of solubilizing agents by cooling the liquid smoke after storage — immediately before further processing.

(The present invention is predicated on the surprising discovery of the unexpected advantages and the commercially significant improvements in the liquid smoke to be achieved by promptly cooling the liquid smoke, immediately, after its production. This critical fortuitous discovery, the essence of the present invention, is described in a latter part of this specification.)

Another stage in the development of the present invention was a controlled study of the effect of extended storage of liquid smoke at several different temperatures including at 40°F (about 4°C) at 70°F (21°C) (essentially "room temperature") and at an elevated temperature (100°F) (38°C). Typical results, as set forth in Table I below, establish the beneficial effects of chilled storage conditions in protecting the staining power (the ability of the smoke to impart smoke color appearance to food products) of the liquid smoke.

Low storage temperatures (40°F, about 4.5°C) retarded the development of precipitable solids, and facilitated the separation of excess precipitable solids. It was found that even a brief exposure to that temperature would produce beneficial effects (e.g. stabilization of staining power). These effects were retained in subsequent processing, even should the liquid smoke be subsequently exposed to ambient storage conditions, i.e., at about 70°F (21°C).

The present invention of purposefully and promptly markedly cooling the liquid smoke, upon production, was found to obviate deleterious thermal effects associated with inherent processing conditions ordinarily existent when following prior art manufacturing techniques. For example, the hot (160°F—180°F, about 70—80°C) crude liquor, when permitted to cool "naturally", without assistance, would ordinarily not reach ambient conditions, e.g., 70°F (21°C) for possibly up to two weeks or longer. Such extended "temperature-elevated" storage has now been shown to effect permanent and irreversible deterioration of the liquid smoke product. The temperature effects noted above for the liquid smoke of applicants' assignees were also found upon testing competitive products.

Some of the significant quality-affecting changes in the parameters of liquid smoke, as a function of extended storage at various temperatures are set forth in the following tabular summarization (Table I).

TABLE I
Storage stability of liquid smoke

| Storage temp. (F)/(C) | Time (Mos.) | Acidity | Solids Total | Pptble | Color Value | Phenols | Carbonyls | Reference staining index |
|---|---|---|---|---|---|---|---|---|
| | | | (Percent of original analysis) | | | | | |
| 40 (4.5) | 12 | 102 | 123 | 139 | 150 | —— | 95 | 98 |
| | 12 | Incr. | Incr. | Incr. | Incr. | Decr. | Decr. | Decr. |
| 70 (21) | 12 | 105 | 141 | 162 | 212 | 77 | 81 | 85 |
| 100 (38) | 12 | 162 | 237 | 625 | 460 | —— | 73 | 73 |

The data establish that upon storage at 40°F (4.5°C) the liquid smoke is stable. At 70°F (21°C) storage the product exhibits reduced stability. Upon storage at 100°F (38°C), product stability is clearly impaired. Among key indicators of liquid smoke quality are the following:

Staining, or Staining Index which measures the coloring power,

Phenols, which reflect flavor strength, and

Carbonyls, which are a secondary indicator of coloring or staining capacity.

The above set forth data derive from tests carried out on 31 samples using three different "codes" of liquid smoke sold commercially by applicants' assignee. Additional studies were made on two other brands (competitors' liquid smoke), which were found to undergo comparable changes of the same key parameters, as a function of time and temperature.

All samples stored at 40°F (4.5°C) exhibited a stable Staining Index over a 12 months' storage period. However, at 70°F (21°C) storage the Staining Index value dropped to about 85% of original values. At 100°F (38°C) storage the Staining Index values had dropped below 90% in from 4 to 6 months and to about 70% in 12 months. The Staining Index is presently considered to be the most important single "property" of liquid smoke.

In all brands tested total acidity increased in the range of from about 5—13% upon storage for one year at room temperature. Total solids increased 34—43%, precipitable solids (soluble solids which precipitate upon dilution of the liquid smoke with two volumes of water), increased by 62—88%, and color values more than doubled. At the same time, phenols dropped 7—23%, and carbonyls dropped 7—19%, roughly paralleling the loss in Staining Index.

All changes noted at room temperature (70°F 21°C) were greatly accelerated at 100°F (38°C), with associated deterioration of smoke quality. In particular, total and precipitable solids increased 2—6 fold and the liquid smoke darkened markedly (a 4- to 8-fold increase in color value). Carbonly concentrations decreased significantly.

While, as indicated, the quality of liquid smoke is impaired least if stored at lower temperatures (e.g., 40°F, 4.5°C), incipient increases in total solids (23%), precipitable solids (39—71%), and in color value (35—50%) are evident.

In addition to the effects on the liquid smoke discussed above, the extent to which "tars" deposited on walls and on the bottom of the storage containers increased appreciably with increase in storage temperature. Upon one year's storage, 10—20% of the container surface was coated at 40°F (4.5°C) storage, 20—60% at 70°F (21°C) storage and 30—80% at 100°F (38°C) storage.

Analysis of liquid smoke manufactured throughout the year showed that the concentration of soluble tars (precipitable solids) contained in the product varied seasonally, that is, with temperature. In a related study involving liquid smoke made during the "hotter" months, it was found that cooling was effective to reduce the concentration of precipitable solids in the range of from about 13 to 50% to meet predetermined specifications. The beneficial effects of chilling were found to exist regardless of the strength or "grade" of the smoke product involved.

In subsequent controlled laboratory experiments it was established that the desired precipitation of soluble tars was optimally carried out by chilling the liquid smoke to about 45°F, (about 7°C), although good results were achieved within a cooling range of about 60°F (about 15°C) to temperatures short of causing freezing.

The technique, in laboratory procedures, was to cool the liquid smoke to the desired temperature, and to maintain that temperature for an additional holding period of 30 minutes. The cooled samples were then centrifuged to remove the cold-precipitated tars, and the residual soluble tars were determined by analysis of the supernatant. The rapid, short-duration cooling was found to be comparable in tar removal effectiveness to what was achieved in extended, multiple-day cooling in refrigeration studies. From about 14% to about 40% of precipitable tars was removed.

The separation of soluble tars, removable through the use of the cooling process of the present invention was found to be a method applicable to all liquid smokes studied. It was found that, in general, the total of such precipitable tars increases with liquid smoke strength (i.e., with increase in the Staining Index and the acid concentration of the liquid smoke), but not proportionally to the initial tar content. Therefore, on a percentage basis, the effectiveness of tar removal has been shown to be, in the practice of the present invention, relatively greater for "weaker" smokes. For the highest strenghh liquid smoke about 15% of the total tars content can be removed by chilling. For two successively lower strength products, about 20% and about 40%, respectively, of total tars were removable.

The physical removal of settled or precipitated tars may be effected by any preferred technique, including centrifugation, filtration, pumping or decantation of the supernatant, or discharge of the tars from a settling tank through controlled valving and pumping. Such separation is carried out prior to packaging the liquid smoke in the "final" container. It has been found that failure physically to remove the separated solids permits such solids to redissolve, thus negating at least partially, the benefits of chilling.

In further exploration of the facets of the present invention, the chilling process was adapted to commercial liquid smoke production.

Fresh crude liquor was allowed to settle overnight, during which time the temperature dropped to approximately 120°F (about 49°C) from its process temperature of 160°F—180°F (about 70—80°C). After removing the settled tars, the partially clarified liquor was pumped into a 6000 US. gallon (approx. 22,500l) tank equipped with cooling coils cooled by recirculating chilled water from an external 30 H.P. refrigeration unit. It was found that 4000 US. gallons (approx. 15,000 l) of liquid smoke can be cooled from 120°F (49°C) to 50°F (10°C) by exposure to the cooling coils for approximately 19 hours. The appearance and the color-imparting capacity of the chilled smoke were much better after this treatment than after the usual 10 to 14 day settling time without chilling. The value of the chilling process was clearly proven in commercial operation. The Color Value, precipitable solids content, and most importantly, the Staining Index of the chilled smoke are improved over that of prior processes.

Conceivably, it might be assumed that in the customary and ordinary traditional manufacture and storage of liquid smoke, the product may, inherently or fortuitously, have been "subjected" to low-temperature treatment, for example, during winter months. However, any such "cooling" would fall substantively short of invoking the benefits of the present invention. For example, any tar-like material precipitated upon storage in drums or other containers, and not removed, would remain as objectionable tars and would constitute a probable contaminant of the comestibles treated with the liquid smoke. In contrast, in the practice of the present invention, the timely cooling of the liquid smoke to sub-ambient temperatures (60°F, 21°C or lower) is promptly followed by physically removing the contaminating "cold-insoluble" precipitated material. Accordingly, the final treated, packaged liquid smoke of the present invention has a significantly reduced level of both tars and precipitable solids, as compared even with any merely "cooled" liquid smoke. Possible contamination of liquid-smoke-treated food products is prevented and stability of the liquid smoke itself is greatly enhanced.

A marked and perhaps the commercially most important improvement realized in the practice of the present invention is a commercially-significant increase in the Staining Index of the liquid smoke. Other parameters affected include Color Value and Precipitable Solids. Each of the latter two is reduced by early chilling of the liquid smoke followed by promptly separating the clear supernatant from the precipitated thicker or tar-like phase.

In analyzing numerous samples of each of four different grades or "strengths" of the commercial liquid smoke of applicant's assignee, it was unexpectedly found that the method of the invention provided products having significantly increased Staining Index, as compared with prior commercial products. In the case of the most concentrated liquid smoke product, the Staining Index was increased about 10%, for the second grade, about 7%; for the third grade, about 7%, and for the most dilute grade over 20%.

Upon averaging the calculated Staining Index at a fixed (12%) acidity for crude liquid smoke samples under the same processing conditions but omitting the rapid cooling and phase separation steps of the invention, no variations in Staining Index were found. These results further confirmed that the Staining Index improvements of the present invention are keyed to the early cooling step of the invention.

In further studies it was found that the chilling process of the invention is effective to preserve almost the full original staining power of the liquid smoke, making feasible an upgrading of the liquid smoke products themselves, at least one "code" grade.

Tests to determine Precipitable Solids, with and without the "quick-cooling" innovation of the invention were carried out on three different "codes" of assignee's liquid smoke, produced commercially. Measurements were "averaged". It was found that the use of the early "cooling" step reduced the precipitable solids in the supernatant liquid smoke, retarded deposition of insoluble tars in the storage containers, and reduced the requirements for solubilizing agents in "soluble" smokes.

## Claims

1. A method of producing a liquid smoke product for use in imparting a wood-smoke-stained appearance and a wood-smoke taste to comestibles treated with said product, which method includes the steps of:
   heating wood in a chamber in the presence of an oxygen-controlled atmosphere to effect thermal decomposition of the wood and to generate smoke,
   contacting the smoke with water to provide an aqueous extract thereof, and
   isolating the aqueous extract,
   characterized in that
   the isolated aqueous extract is cooled to a temperature below about 60°F (about 15°C) to precipitate a phase insoluble in the aqueous extract, and
   said phase and said extract are separated from contact with each other, all within five days of having produced said aqueous extract, to provide a residual aqueous liquid smoke product.

2. A method according to claim 1 in which the said cooling and separation are completed within 72 hours of the production of the said extract.

3. A method according to claim 2 in which the said cooling and separation are completed within 48 hours of the production of the said extract.

4. A method according to any of the preceding claims wherein the extract when produced is at a temperature of 160° to 180°F (approximately 70° to 80°C).

5. A method according to any one of the preceding claims in which the extract is cooled to 45°F (approximately 7°C) or below.

6. A method according to any one of the preceding claims in which the product is subsequently stored at about 40°F (approximately 4.5°C).

7. A liquid smoke solution comprising an aqueous extract of smoke formed from the burning of wood and having enhanced storage stability, improved staining index, and a reduced concentration of materials which are separable from said aqueous extract upon dilution thereof, characterized in that the solution comprising a fraction of said aqueous extract remaining upon separation therefrom of insolubles produced by cooling said extract to a temperature below about 60°F (about 15°C) within 5 days after production of said extract.

## Patentansprüche

1. Verfahren zum Herstellen eines flüssigen Rauchproduktes, um damit behandelten Nahrungsmitteln ein mit Holzrauch gefärbtes Aussehen und einen Holzrauch-Geschmack zu verleihen, mit den folgenden Stufen:

Erhitzen von Holz in einer Kammer in Gegenwart einer hinsichtlich Sauerstoff eingestellten Atmosphäre, um die thermische Zersetzung des Holzes zu bewirken und Rauch zu erzeugen,

Inberührungbringen des Rauches mit Wasser, um einen wässrigen Extrakt davon zu schaffen und

Isolieren des wässrigen Extraktes, dadurch gekennzeichnet, daß

der isolierte wässrige Extrakt auf eine Temperatur unterhalb von etwa 15°C (etwa 60°F) abgekühlt wird, um eine im wässrigen Extrakt unlösliche Phase auszufällen und

die genannte Phase und der genannte Extrakt innerhalb von 5 Tagen nach Herstellung des wässrigen Extraktes voneinander getrennt werden, um eine Rauch-Restprodukt in einer wässrigen Flüssigkeit zu schaffen.

2. Verfahren nach Anspruch 1, bei dem das genannte Kühlen und Trennen innerhalb von 72 Stunden nach der Herstellung des genannten Extraktes abgeschlossen sind.

3. Verfahren nach Anspruch 2, bei dem das genannte Kühlen und Abtrennen innerhalb von 48 Stunden nach der Herstellung des genannten Extraktes abgeschlossen sind.

4. Verfahren nach irgendeinem der vorhergehenden Ansprüche, bei dem der hergestellte Extrakt eine Temperatur von etwa 70° bis 80°C (etwa 160° bis 180°F) hat.

5. Verfahren nach irgendeinem der vorhergehenden Ansprüche, bei dem der Extrakt auf etwa 7°C (45°F) oder darunter abgekühlt wird.

6. Verfahren nach irgendeinem der vorhergehenden Ansprüche, bei dem das Produkt nachfolgend bei etwa 4,5°C (etwa 40°F) gelagert wird.

7. Flüssige Rauschlösung, umfassend einen wässrigen Extrakt des Rauches, der beim Verbrennen von Holz gebildet ist, und der eine verbesserte Lagerstabilität, einen verbesserten Färbeindex und eine geringere Konzentration von Materialien aufweist, die beim Verdünnen von dem genannten wässrigen Extrakt trennbar sind, dadurch gekennzeichnet, daß die Lösung eine Fraktion des gennannten wässrigen Extraktes umfasst, die nach Abtrennung der unlöslichen Bestandteile verbleibt, die innerhalb von 5 Tagen nach Herstellung des genannten Extrakts durch Abkühlen des Extraktes auf eine Temperatur unterhalb von etwa 15°C (etwa 60°F) ausgefällt sind.

## Revendications

1. Méthode de production d'un produit de fumée liquide à utiliser pour impartir un aspect ayant la teinte de la fumée du bois et un goût de la fumée du bois à des comestibles traités avec ledit produit, laquelle méthode comprend les étapes de:

chauffer du bois dans une chambre en présence d'une atmosphère contrôlée en oxygène pour effectuer la décomposition thermique du bois et produire de la fumée,

mettre la fumée en contact avec de l'eau pour produire sont extrait aqueux, et

isoler l'extrait aqueux, caractérisée en ce que

l'extrait aqueux isolée est refroidi à une températuré inférieure à environ 60°F (environ 15°C) pour précipiter une phase insoluble dans l'extrait aqueux, et

ladite phase et ledit extrait sont séparés d'un contact l'un avec l'autre, dans les cinq jours suivant la production dudit extrait aqueux, pour obtenir un produit résiduel de fumée liquide aqueuse.

2. Méthode selon la revendication 1 où lesdites refroidissement et séparation sont accomplis dans les 72 heures à partir de la production dudit extrait.

3. Méthode selon la revendication 2, où lesdits refroidissement et séparation sont accomplis dans les 48 heures après la production dudit extrait.

4. Méthode selon l'une quelconque des revendications précédentes où l'extrait, quand il est produit, est à une température de 160° à 180°F (environ 70° à 80°C).

5. Méthode selon l'une quelconque des revendications précédentes où l'extrait est refroidi à 45°F (environ 7°C) ou moins.

6. Méthode selon l'une quelconque des revendications précédentes où le produit est subséquemment stocké à environ 40°F (environ 4,5°C).

7. Solution de fumée liquide comprenant un extrait aqueux de fumée formé par la combustion du bois et ayant une meilleure stabilité de conservation, un meilleur indice de coloration et une concentration réduite de matières qui sont séparables dudit extrait aqueux lors de sa dilution, caractérisée en ce que la solution comprend une fraction dudit extrait aqueux restant lors de sa séparation des matières insolubles produites par refroidissement dudit extrait jusqu'à une température inférieure à environ 60°F (environ 15°C) dans les cinq jours suivant la production dudit extrait.